(19) Europäisches Patentamt
European Patent Office
Office européen des brevets

(11) **EP 4 530 705 A1**

(12) **EUROPEAN PATENT APPLICATION**

(43) Date of publication:
**02.04.2025 Bulletin 2025/14**

(21) Application number: **24168920.7**

(22) Date of filing: **08.04.2024**

(51) International Patent Classification (IPC):
**G02C 7/04** *(2006.01)* **G02C 7/02** *(2006.01)*

(52) Cooperative Patent Classification (CPC):
**G02C 7/048; G02C 7/024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 TW 112137280**

(71) Applicant: **Visco Vision Inc.**
**Taoyuan City 33341 (TW)**

(72) Inventor: **YEH, Chin-Hao**
**33341 Taoyuan City (TW)**

(74) Representative: **Viering, Jentschura & Partner mbB**
**Patent- und Rechtsanwälte**
**Am Brauhaus 8**
**01099 Dresden (DE)**

(54) **CONTACT LENS**

(57) Contact lenses include a toric lens body (1). The toric lens body (1) has radii extending outward from a center (O) along a radial direction. Cross sections of the toric lens body (1) are defined by the radii and the toric lens body (1) in a thickness direction. An area "A" of the cross section is presented by a formula (I): $A = P - f(\theta)$. In formula (I), $\theta$ is an azimuth angle, $0° \leq \theta \leq 360°$, $f(\theta)$ is a polynomial, and $0.5 \leq P \leq 7$.

FIG. 1

EP 4 530 705 A1

**Description**

**FIELD OF THE INVENTION**

The present invention relates to a contact lens, and more particularly to a contact lens for astigmatism.

**BACKGROUND OF THE INVENTION**

Positioning of contact lenses is extremely important to a contact lens for astigmatism. If a positioning effect of the contact lens is not good, the contact lens can easily rotate while being worn, such that the ideal vision correction cannot be achieved.

According to different positioning manners, contact lenses that are currently available on the market can be classified into a ballast designed contact lens or a dual-thin-zone designed contact lens. In these two positioning manners, the positioning effect is achieved by adjusting a thickness of the contact lens.

When the ballast designed contact lens is worn, a heavier side of the contact lens tends to rotate downward due to gravity, so as to achieve the positioning effect. When the dual-thin-zone designed contact lens is worn, two thin sides of the contact lens may rotate to overlap with the eyelid upon blinking of the eye, so as to achieve the positioning effect.

The contact lens can be demarcated into an optical region at the center and an annular region at the periphery. A thickness of the optical region can be adjusted according to different prescriptions. When the prescription increases, the thickness of the optical region increases accordingly. A thickness of the annular region is adjusted according to different positioning mechanisms, such as a ballast design or a dual-thin-zone design. The positioning effect is mainly achieved through the annular region at the periphery.

In a thickness design process of the contact lens, the annular region is divided into a plurality of units, and then a thickness of each of the units is designed to achieve the positioning effect. During the thickness design process, only the positioning effect is taken into consideration, without consideration being given to vision correction in the optical region.

Hence, a significant thickness difference is formed on a boundary between the optical region and the annular region. Even if adjustment is made to a curvature of the contact lens, the thickness difference formed on the boundary may still cause uncomfortableness and a poor user experience.

Specifically, when the prescription of the contact lens is 0.0 diopters, the thickness difference of the contact lens ranges from 15% to 200%. When the prescription of the contact lens is high (such as 7.00 diopters), the thickness difference of the contact lens ranges from 20% to 110%.

Therefore, how to reduce the thickness difference of the contact lens through improvements in structural design has become an important issue to be solved in the related art.

SUMMARY OF THE INVENTION

In response to the above-referenced technical inadequacies, the present invention provides a contact lens according to independent claim 1, which has a low thickness difference, such that the contact lens can be worn with comfort and have a good rotation positioning effect. The dependent claims show further embodiments of claim 1.

In order to solve the above-mentioned problems, one of the technical aspects adopted by the present invention is to provide a contact lens. The contact lens includes a toric lens body. The toric lens body has radii extending outward from a center along a radial direction. Cross sections of the toric lens body are defined by the radii and the toric lens body in a thickness direction. An area "A" of the cross section is presented by a formula (I): $A = P - f(\theta)$. In formula (I), $\theta$ is an azimuth angle, $0° \le \theta \le 360°$, $f(\theta)$ is a polynomial, and $0.5 \le P \le 7$.

In one of the possible or preferred embodiments, $f(\theta)$ is presented by: $(a\theta^4 + b\theta^3 + c\theta^2 + d\theta)$, in which $\theta$ is an azimuth angle, $0° \le \theta \le 360°$, $-10^{-8} \le a \le -10^{-10}$, $10^{-8} \le b \le 10^{-5}$, $-10^{-1} \le c \le -10^{-5}$, and $10^{-5} \le d \le 10^{-1}$.

In one of the possible or preferred embodiments, $-10^{-8} \le a \le -10^{-9}$, $10^{-6} \le b \le 10^{-5}$, $-10^{-1} \le c \le -10^{-4}$, and $10^{-4} \le d \le 10^{-1}$.

In one of the possible or preferred embodiments, $f(\theta)$ is a trigonometric polynomial and is presented by: $[k1\sin(\theta/2) + k2\cos^2(\theta/2)]$, in which $\theta$ is an azimuth angle, $0° \le \theta \le 360°$, $-0.2 \le k1 \le 0.5$, $0 \le k2 \le 6$, and $k2 < P$.

In one of the possible or preferred embodiments, a maximum thickness difference ratio of the toric lens body in the radial direction is lower than 100%.

In one of the possible or preferred embodiments, the maximum thickness difference ratio of the toric lens body in the radial direction is lower than 55%.

In one of the possible or preferred embodiments, an area ratio of the cross section of the toric lens body at an azimuth angle of 180° to the cross section of the toric lens body at an azimuth angle of 0° ranges from 1.0 to 7.5.

In one of the possible or preferred embodiments, an area ratio of the cross section of the toric lens body at an azimuth angle of 90° to the cross section of the toric lens body at an azimuth angle of 0° ranges from 1.0 to 4.5.

In one of the possible or preferred embodiments, an area ratio of the cross section of the toric lens body at an azimuth angle of 180° to the cross section of the toric lens body at an azimuth angle of 90° ranges from 1.0 to 1.8.

In one of the possible or preferred embodiments, the cross section of the toric lens body includes an optical regional section and an annular regional section.

Therefore, in the contact lens provided by the present invention, by virtue of "an area "A" of the cross section being presented by a formula (I): A = P - f(θ)" and "θ being an azimuth angle, $0° \leq \theta \leq 360°$, $0.5 \leq P \leq 7$, and f(θ) being a polynomial," the contact lens can be worn with comfort and have a rotation positioning effect.

## BRIEF DESCRIPTION OF THE DRAWINGS

The described embodiments may be better understood by reference to the following description and the accompanying drawings, in which:

FIG. 1 is a schematic perspective view of a contact lens according to the present invention.
FIG. 2 is a schematic perspective view of an arc section of the contact lens of FIG. 1.
FIG. 3 is a schematic enlarged view of the arc section of FIG. 2.
FIG. 4 is a schematic top view of the contact lens according to the present invention.
FIG. 5 is a diagram showing a relationship between an area of the arc section of Example 1 and an azimuth angle.
FIG. 6 is a schematic view of the arc section of Example 1 at an azimuth angle of 0°.
FIG. 7 is a schematic view of the arc section of Example 1 at an azimuth angle of 90°.
FIG. 8 is a schematic view of the arc section of Example 1 at an azimuth angle of 180°.

## DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

In order to overcome the deficiencies in the conventional technology, the present invention provides a contact lens having a good positioning effect and a low thickness difference. Different from a previous design in which only the influence of a thickness of an annular region upon a positioning effect is taken into consideration, the contact lens of the present invention is designed based on an area of an arc section taken along a radius. Since the area of the arc section covers the annular region and an optical region of the contact lens at the same time, the positioning effect of the annular region and a thickness difference formed on a boundary between the annular region and the optical region are both taken into consideration during the design process.

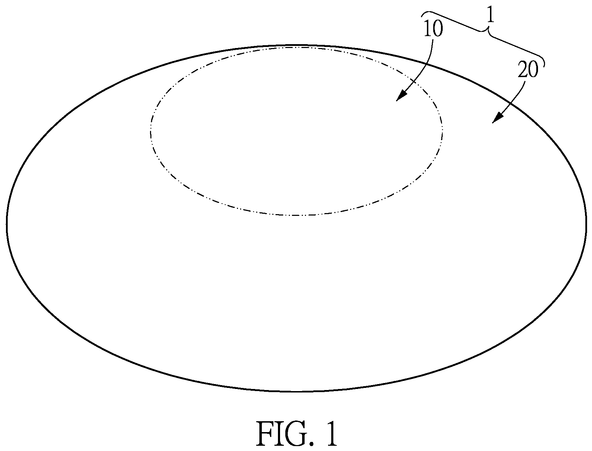

Referring to FIG. 1, the contact lens of the present invention includes a toric lens body 1. For convenience of illustration, the toric lens body 1 can be demarcated into an optical region 10 and an annular region 20. However, in practice, the optical region 10 and the annular region 20 are integrally formed, and there is no obvious boundary formed therebetween.

Specifically, the optical region 10 is located at a center of the toric lens body 1. An area of the optical region 10 corresponds in size to the pupil. The optical region 10 is surrounded by the annular region 20, and the optical region 10 and the annular region 20 are concentric with each other.

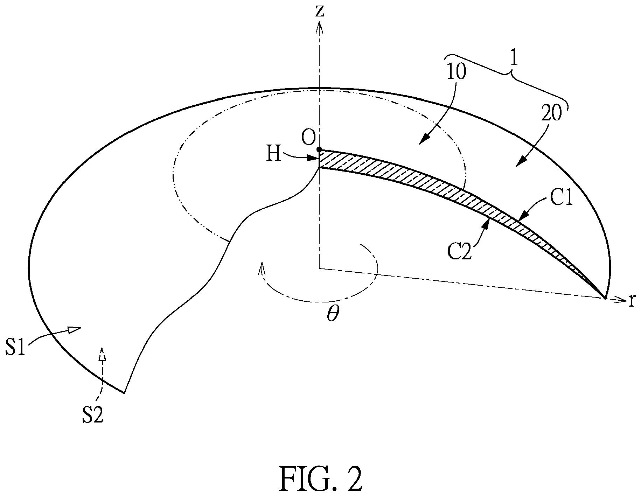

Referring to FIG. 2, an outer surface S 1 of the toric lens body 1 has a center O. The toric lens body 1 has radii extending outward from the center O along a radial direction. Cross sections of the toric lens body 1 are defined by the radii and the toric lens body 1 in a thickness direction, i.e., a z-axis direction shown in FIG. 2.

Specifically, the cross section is an arc section. The arc section is a region formed by a first curve C1, a second curve C2, and a center section line H. A radius and the outer surface S1 of the toric lens body 1 intersect with each other at the first curve C1, and a radius and an inner surface S2 of the toric lens body 1 intersect with each other at the second curve C2. The center section line H is formed by extending from the center O along the z-axis direction.

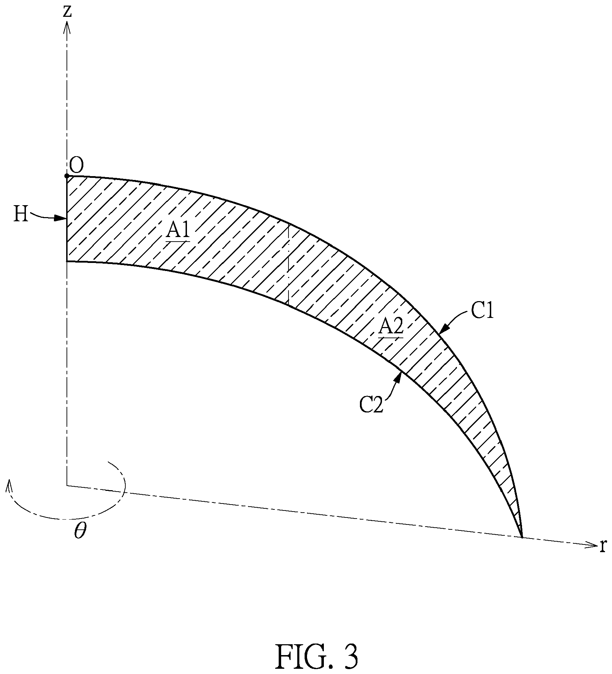

Referring to FIG. 3, FIG. 3 is a schematic enlarged schematic view of the arc section of FIG. 2. The arc section covers the optical region 10 and the annular region 20 at the same time. In other words, the arc section includes an optical regional section A1 and an annular regional section A2. Specifically, the optical regional section A1 is intersected by a radius along the thickness direction and the optical region 10, and the annular regional section A2 is intersected by a radius along the thickness direction and the annular region 20.

In response to changes of an azimuth angle $\theta$, the toric lens body 1 has different radii. In the present invention, areas "A" of the arc sections at different azimuth angles $\theta$ are presented by a formula (I): $A = P - f(\theta)$. Specifically, the areas "A" of the arc sections at different azimuth angles $\theta$ can be approximated with a parabola curve.

In the formula (I), $\theta$ is an azimuth angle, and $f(\theta)$ is a polynomial, in which $0° \leq \theta \leq 360°$, and $0.5 \leq P \leq 7$. In addition, the area "A" of the arc section in the formula (I) is a sum of areas of the optical regional section A1 and the annular regional section A2.

In an exemplary embodiment, $f(\theta)$ can be represented by: $(a\theta^4 + b\theta^3 + c\theta^2 + d\theta)$. Therefore, the areas "A" of the arc sections at different azimuth angles $\theta$ can be represented by a formula (II): $A = P - (a\theta^4 + b\theta^3 + c\theta^2 + d\theta)$.

In the formula (II), $\theta$ is an azimuth angle, $0° \leq \theta \leq 360°$, $0.5 \leq P \leq 7$, $-10^{-8} \leq a \leq -10^{-10}$, $10^{-8} \leq b \leq 10^{-5}$, $-10^{-1} \leq c \leq -10^{-5}$, and $10^{-5} \leq d \leq 10^{-1}$.

Different ones of the formula (II) can be obtained by substituting different parameters "P", "a", "b", "c", and "d". The areas of the arc sections at different azimuth angles can be obtained according to the formula (II), such that the areas of the annular regional sections A2 can be designed.

In an exemplary embodiment, in the formula (II), $-10^{-8} \leq a \leq -10^{-9}$, $10^{-6} \leq b \leq 10^{-5}$, $-10^{-1} \leq c \leq -10^{-4}$, and $10^{-4} \leq d \leq 10^{-1}$.

Furthermore, $f(\theta)$ can be a trigonometric polynomial. According to experimental results, when the areas of the arc sections of the toric lens body 1 are designed based on the trigonometric polynomial, the contact lens thus obtained can be worn with comfort and has a rotation positioning effect.

In an exemplary embodiment, $f(\theta)$ can be represented by: $[k1\sin(\theta/2) + k2\cos^2(\theta/2)]$. Therefore, the areas "A" of the cross sections at different azimuth angles can be presented by a formula (III): $A = P - [k1\sin(\theta/2) + k2\cos^2(\theta/2)]$.

In the formula (III), $0° \leq \theta \leq 360°$, $0.5 \leq P \leq 7$, $-0.2 \leq k1 \leq 0.5$, $0 \leq k2 \leq 6$, and $k2 < P$.

Different versions of the formula (III) can be obtained by substituting different parameters "P", "k1", and "k2". The areas of the arc sections at different azimuth angles can be calculated according to the formula (III), such that the area of the annular regional section A2 can be designed. A specific design manner is illustrated in Example 1.

In an exemplary embodiment, in the formula (III), $0.5 \leq P \leq 7$.

In the formula (III), a maximum area of the arc section of the toric lens body 1 is adjusted according to "P - k1", and a minimum area of the arc section of the toric lens body 1 is adjusted according to "P - k2". The higher "k1" is, the greater the extent by which the area of the arc section changes with the azimuth angle. A value of "k2" can be used to slightly adjust a difference between the areas of adjacent ones of the arc sections, such that an overall appearance of the toric lens body 1 can be smoother.

According to formula (II) and formula (III), when the azimuth angle $\theta$ is 0°, the area of the arc section is the smallest. When the azimuth angle $\theta$ is 180°, the area of the arc section is the largest. The area of the arc section at an azimuth angle $\theta$ of 90° is the same as the area of the arc section at an azimuth angle $\theta$ of 270°. As such, the toric lens body 1 of the present invention is a ballast-designed contact lens.

Referring to FIG. 3, the optical region 10 of the toric lens body 1 can be obtained by integrating the optical regional section A1 according to an azimuth direction. Therefore, the structure of the optical region 10 can be obtained by designing the area of the optical regional section A1 at different azimuth angles $\theta$ according to optometry data of a patient and then integrating the optical regional section A1 according to the azimuth direction.

Similarly, the annular region 20 of the toric lens body 1 can be obtained by integrating the annular regional section A2 according to the azimuth direction. The difference is that, before designing the area of the annular regional section A2, the area of the arc section at each azimuth angle $\theta$ is first calculated according to the formula (III). The area of the annular regional section A2 can be calculated by subtracting the area of the optical regional section A1 from said area of the arc section. Subsequently, the structure of the annular region 20 can be obtained by integrating the annular regional section A2 according to the azimuth direction.

Based on the descriptions above, the structure of the toric lens body 1 can be designed by adjusting the area of the arc section, such that the influences of the optical region 10 and the annular region 20 on the overall structure of the toric lens body 1 are taken into consideration. Accordingly, a thickness difference formed on a boundary between the optical region 10 and the annular region 20 can be decreased.

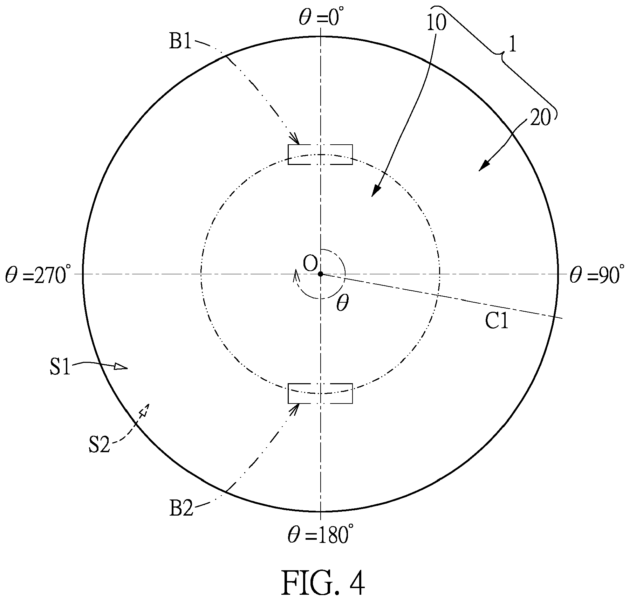

Reference is made to FIG. 4, which is a schematic top view of the toric lens body of FIG. 2. For convenience of illustration, an azimuth angle θ of 0° is defined to be above the toric lens body 1, and an azimuth angle θ of 180° is defined to be under the toric lens body 1.

Generally, the thickness difference is likely to occur on boundaries B1, B2 between the optical region 10 and the annular region 20. For a ballast-designed contact lens, the top of the toric lens body 1 is usually thinner, and the bottom of the toric lens body 1 is usually thicker.

Hence, when an astigmatism prescription is high, a thickness of the contact lens in the optical region 10 is great, such that the thickness difference is likely to occur on the boundary B1 at the top of the toric lens body 1 (i.e., the azimuth angle θ is 0°). When the astigmatism prescription is low, the thickness of the contact lens in the optical region 10 is thin, such that the thickness difference is likely to occur on the boundary B2 at the bottom of the toric lens body 1 (i.e., the azimuth angle θ is 180°).

[Example 1]

In Example 1, "P" is 2.5, k1 is 0.5, and k2 is 2, such that the formula (III) is represented by: $2.5 - [0.5\sin(\theta/2) + 2\cos^2(\theta/2)]$.

In a process for designing the contact lens, the toric lens body 1 is demarcated into the optical region 10 and the annular region 20 as shown in FIG. 1. The toric lens body 1 has radii extending outward from the center O along different azimuth angels θ. The arc sections are defined by the radii and the toric lens body 1 in the thickness direction. The arc section includes the optical regional section A1 and the annular regional section A2.

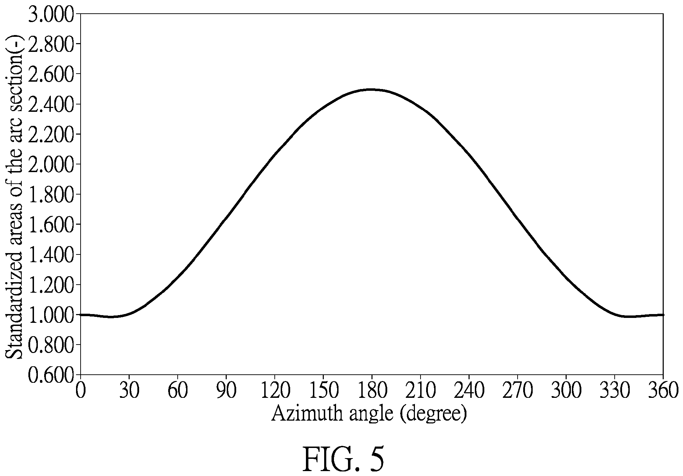

In Example 1, the area of the optical regional section A1 is designed according to optometry data obtained with an astigmatism prescription of 0.0 diopters. The areas of the arc sections at different azimuth angles (design data) can be obtained by calculation of the formula (III). The areas of the arc sections at different azimuth angles are shown in FIG. 5. It can be observed from FIG. 5 that the toric lens body 1 of Example 1 is a ballast-designed contact lens.

The area of the annular regional section A2 is designed according to the optometry data and the design data. Since the arc section is formed by the optical regional section A1 and the annular regional section A2, the area of the annular regional section A2 can be obtained by subtracting the area of the optical regional section A1 from the area calculated by the formula (III).

After independently designing the optical regional section A1 and the annular regional section A2 at different azimuth angles θ, the optical regional section A1 and the annular regional section A2 can be merged into the arc section. The toric lens body 1 of Example 1 can be obtained by integrating the arc section along the azimuth direction.

It should be noted that the process mentioned above is only one of the implementations provided for illustration purposes, and the present invention is not limited thereto.

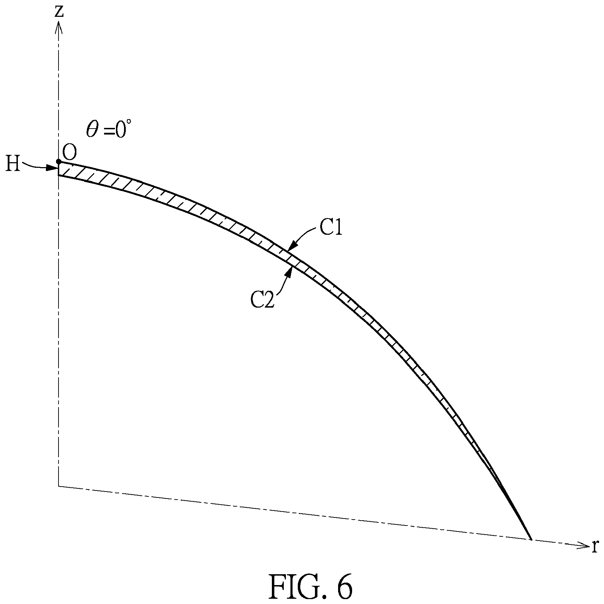

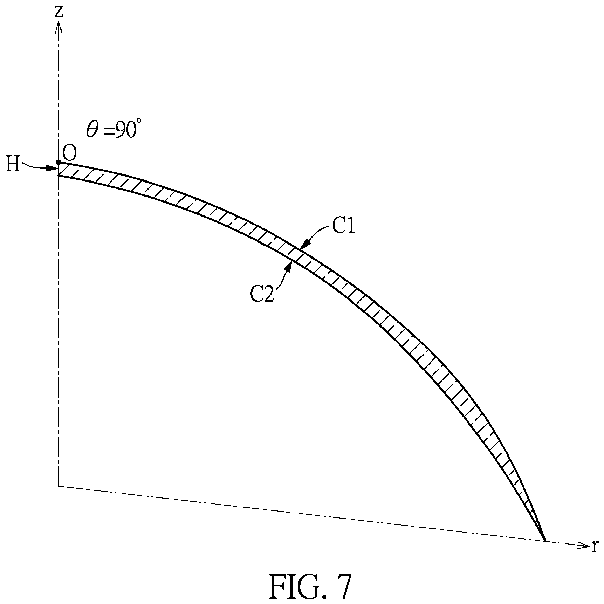

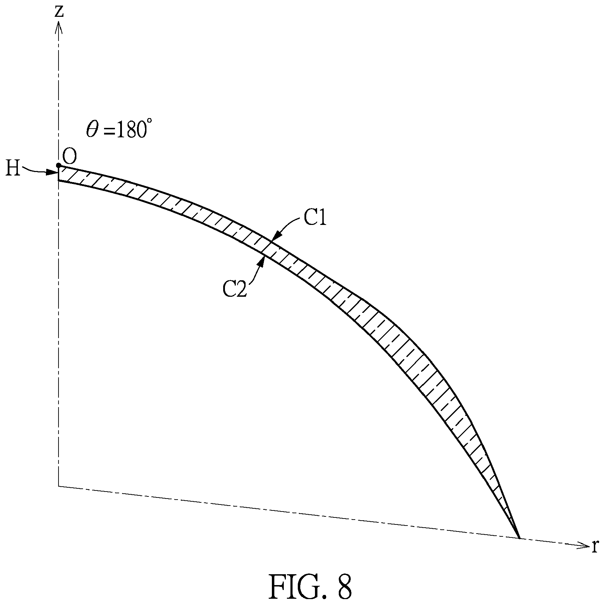

References are made to FIG. 6 to FIG. 8, which are schematic views of the arc sections of the toric lens body 1 respectively at azimuth angles of 0°, 90°, and 180°. It can be observed from FIG. 6 to FIG. 8 that, when the azimuth angle increases, the area of the optical regional section A1 only slightly increases, but an increase of the area of the annular regional section A2 is more significant. In terms of the overall structure, the toric lens body 1 can still have a smooth appearance.

The areas and standardized areas of the arc sections at azimuth angles of 0°, 90°, and 180° are listed in Table 1.

Table 1

| Azimuth angle | 0° | 90° | 180° |
|---|---|---|---|
| Area of the arc section | $0.50\ mm^2$ | $1.15\ mm^2$ | $2.00\ mm^2$ |
| Standardized areas of the arc section | 1.00 | 2.30 | 4.00 |

At the boundary B1 (i.e., the azimuth angle is 0°) and the boundary B2 (i.e., the azimuth angle is 180°), the thicknesses of the toric lens body 1 on an edge of the optical region 10 and on an edge of the annular region 20 are measured. In addition, the thickness difference and a thickness difference ratio are calculated. The thickness difference ratio is calculated by dividing the thickness difference at the boundaries B1, B2 between the optical region 10 and the annular region 20 by a thickness of the edge of the optical region 10. The specific thicknesses, the thickness difference, and the thickness difference ratio at the boundaries B1, B2 are listed in Table 2.

Table 2

| | Thickness of edge of optical region | Thickness of edge of annular region | Thickness difference | Thickness difference ratio |
|---|---|---|---|---|
| Boundary B1 | 110 μm | 120 μm | 10 μm | 9% |

(continued)

|  | Thickness of edge of optical region | Thickness of edge of annular region | Thickness difference | Thickness difference ratio |
|---|---|---|---|---|
| Boundary B2 | 220 μm | 265 μm | 45 μm | 20% |

According to Table 2, the thickness difference ratio at the boundaries B1, B2 between the optical region 10 and the annular region 20 of the toric lens body 1 of the present invention is lower than 150%, which is lower than the maximum thickness difference ratio (200%) of a conventional toric lens body. Since the areas of the optical region 10 and the annular region 20 are taken into consideration at the same time, the toric lens body 1 of the present invention has a good positioning effect and improved wearing comfort.

Preferably, the thickness difference ratio at the boundaries B1, B2 between the optical region 10 and the annular region 20 can be lower than 150%. More preferably, the thickness difference ratio at the boundaries B1, B2 between the optical region 10 and the annular region 20 can be lower than 100%. Even more preferably, the thickness difference ratio at the boundaries B1, B2 between the optical region 10 and the annular region 20 can be lower than 50% or even lower than 25%.

After substituting the parameters "P", "k1", and "k2" of Example 1 into the formula (III), the areas of the arc sections at azimuth angles of 0°, 90°, and 180° ($A_{\theta=0°}$, $A_{\theta=90°}$, and $A_{\theta=180°}$) are calculated and listed in Table 4. The area of the arc section at an azimuth angle of 270° is the same as the area of the arc section at an azimuth angle of 90°, which will not be reiterated herein.

Moreover, an area ratio ($A_{\theta=180°}/A_{\theta=0°}$) of the arc section at an azimuth angle of 180° to that at an azimuth angle of 0°, an area ratio ($A_{\theta=90°}/A_{\theta=0°}$) of the arc section at an azimuth angle of 90° to that at an azimuth angle of 0°, and an area ratio ($A_{\theta=180°}/A_{\theta=90°}$) of the arc section at an azimuth angle of 180° to that at an azimuth angle of 90° are calculated and listed in Table 4.

[Example 2]

The toric lens body 1 in Example 2 is similar to the toric lens body 1 in Example 1. The difference is that the area of the optical regional section A1 is designed according to optometry data obtained with an astigmatism prescription of 7.0 diopters.

The area of the arc section at different azimuth angles (design data) can be obtained by calculation of the formula (III). The areas of the annular regional section A2 can be calculated according to the optometry data and the design data.

After designing the optical regional section A1 and the annular regional section A2, the optical regional section A1 and the annular regional section A2 are merged and then integrated according to the azimuth direction, such that the toric lens body 1 in Example 2 can be obtained.

Subsequently, the thicknesses of the toric lens body 1 at the boundary B1 (i.e., the azimuth angle is 0°) and the boundary B2 (i.e., the azimuth angle is 180°) are measured, and the thickness difference and the thickness difference ratio are calculated. The specific thicknesses, the thickness difference, and the thickness difference ratio at the boundaries B1, B2 are listed in Table 3.

Table 3

|  | Thickness of edge of optical region | Thickness of edge of annular region | Thickness difference | Thickness difference ratio |
|---|---|---|---|---|
| Boundary B1 | 120 μm | 150 μm | 30 μm | 25% |
| Boundary B2 | 170 μm | 260 μm | 90 μm | 53% |

According to Table 3, even for the toric lens body 1 with a high astigmatism prescription (e.g., 7.0 diopters), the thickness difference ratio at the boundaries B1, B2 between the optical region 10 and the annular region 20 of the toric lens body 1 can be lower than 100%, which is lower than the maximum thickness difference ratio (110%) of the conventional toric lens body. Since the areas of the optical region 10 and the annular region 20 are taken into consideration at the same time, the toric lens body 1 can have a good positioning effect and improved wearing comfort.

Preferably, the thickness difference ratio at the boundaries B1, B2 between the optical region 10 and the annular region 20 of the toric lens body 1 can be lower than 75%. More preferably, the thickness difference ratio at the boundaries B1, B2 between the optical region 10 and the annular region 20 of the toric lens body 1 can be lower than 55%.

[Examples 3 to 9]

The toric lens bodies 1 in Example 3 to 9 are similar to the toric lens body 1 in Example 1. The difference is that the parameters "P", "k1", and "k2" substituting into the formula (III) are different. Therefore, the areas of the arc sections (design data) in Examples 3 to 9 are different.

The parameters "P", "k1", and "k2" substituting into the formula (III) in Examples 3 to 9 are listed in Table 4, and the areas of the arc sections at azimuth angles of 0°, 90°, and 180° ($A_{\theta=0°}$, $A_{\theta=90°}$, and $A_{\theta=180°}$) are calculated and listed in Table 4. The area of the arc section at an azimuth angle of 270° is the same as the area of the arc section at an azimuth angle of 90°, and will not be reiterated herein.

Moreover, an area ratio ($A_{\theta=180°}/A_{\theta=0°}$) of the arc section at an azimuth angle of 180° to that at an azimuth angle of 0°, an area ratio ($A_{\theta=90°}/A_{\theta=0°}$) of the arc section at an azimuth angle of 90° to that at an azimuth angle of 0°, and an area ratio ($A_{\theta=180°}/A_{\theta=90°}$) of the arc section at an azimuth angle of 180° to that at an azimuth angle of 90° are calculated and listed in Table 4.

Table 4

|  | Example | | | | | | | |
|---|---|---|---|---|---|---|---|---|
|  | 1 | 3 | 4 | 5 | 6 | 7 | 8 | 9 |
| P | 2.5 | 7 | 7 | 3 | 4 | 1.5 | 0.8 | 3 |
| k1 | 0.5 | -0.2 | 0.5 | 0 | 0 | 0.1 | -0.2 | -0.2 |
| k2 | 2 | 6 | 6 | 2 | 2 | 0.5 | 0 | 0 |
| $A_{\theta=0°}$ | 0.5 | 1 | 1 | 1 | 2 | 1 | 0.8 | 3 |
| $A_{\theta=90°}$ | 1.15 | 4.14 | 3.65 | 2 | 3 | 1.18 | 0.94 | 3.14 |
| $A_{\theta=180°}$ | 2 | 7.2 | 6.5 | 3 | 4 | 1.4 | 1 | 3.2 |
| $A_{\theta=180°}/A_{\theta=0°}$ | 4.00 | 7.20 | 6.50 | 3.00 | 2.00 | 1.40 | 1.25 | 1.07 |
| $A_{\theta=90°}/A_{\theta=0°}$ | 2.30 | 4.14 | 3.65 | 2.00 | 1.50 | 1.18 | 1.18 | 1.05 |
| $A_{\theta=180°}/A_{\theta=90°}$ | 1.74 | 1.74 | 1.78 | 1.50 | 1.33 | 1.19 | 1.06 | 1.02 |

According to Table 4, the area ratio of the arc section at an azimuth angle of 180° to that at an azimuth angle of 0° ranges from 1.0 to 7.5. The area ratio of the arc section at an azimuth angle of 90° to that at an azimuth angle of 0° ranges from 1.0 to 4.5. The area ratio of the arc section at an azimuth angle of 180° to that at an azimuth angle of 90° ranges from 1.0 to 1.8.

[Examples 10 to 12]

The toric lens bodies 1 in Example 10 to 12 are similar to the toric lens body 1 in Example 1. The difference is that the parameters "P", "a", "b", "c" and "d" substituting into the formula (II) are different. Therefore, the areas of the arc sections (design data) in Examples 10 to 12 are different.

The parameters "P", "a", "b", "c" and "d" substituting into the formula (II) in Examples 10 to 12 are listed in Table 5, and the areas of the arc sections at azimuth angles of 0°, 90°, and 180° ($A_{\theta=0°}$, $A_{\theta=90°}$, and $A_{\theta=180°}$) are calculated and listed in Table 5.

Moreover, an area ratio ($A_{\theta=180°}/A_{\theta=0°}$) of the arc section at an azimuth angle of 180° to that at an azimuth angle of 0°, an area ratio ($A_{\theta=90°}/A_{\theta=0°}$) of the arc section at an azimuth angle of 90° to that at an azimuth angle of 0°, and an area ratio ($A_{\theta=180°}/A_{\theta=90°}$) of the arc section at an azimuth angle of 180° to that at an azimuth angle of 90° are calculated and listed in Table 5.

Table 5

|  | Example | | |
|---|---|---|---|
|  | 10 | 11 | 12 |
| P | 1.09 | 0.53 | 2.03 |
| a | $-7 \times 10^{-9}$ | $-2 \times 10^{-9}$ | $-2 \times 10^{-9}$ |
| b | $5 \times 10^{-6}$ | $2 \times 10^{-6}$ | $2 \times 10^{-6}$ |

(continued)

| | | Example | | |
|---|---|---|---|---|
| | | 10 | 11 | 12 |
| c | | $-1 \times 10^{-3}$ | $-3 \times 10^{-4}$ | $-3 \times 10^{-4}$ |
| d | | $1 \times 10^{-2}$ | $1 \times 10^{-2}$ | $5 \times 10^{-3}$ |
| $A_{\theta=0°}$ | | 1 | 0.5 | 2 |
| $A_{\theta=90°}$ | | 4.14 | 1.15 | 3 |
| $A_{\theta=180°}$ | | 7.2 | 2 | 4 |
| $A_{\theta=180°}/A_{\theta=0°}$ | | 7.20 | 4.00 | 2.00 |
| $A_{\theta=90°}/A_{\theta=0°}$ | | 4.14 | 2.30 | 1.50 |
| $A_{\theta=180°}/A_{\theta=90°}$ | | 1.74 | 1.74 | 1.33 |

According to Table 5, the area ratio of the arc section at an azimuth angle of 180° to that at an azimuth angle of 0° ranges from 1.0 to 7.5. The area ratio of the arc section at an azimuth angle of 90° to that at an azimuth angle of 0° ranges from 1.0 to 4.5. The area ratio of the arc section at an azimuth angle of 180° to that at an azimuth angle of 90° ranges from 1.0 to 1.8.

[Beneficial Effects of the Embodiments]

In conclusion, in the contact lens provided by the present invention, by virtue of "an area "A" of the cross section being presented by a formula (I): A = P - f(θ)" and "θ being an azimuth angle, $0° \leq \theta \leq 360°$, $0.5 \leq P \leq 7$, and f(θ) being a polynomial," the contact lens can be worn with comfort and have a rotation positioning effect.

Furthermore, the area (i.e., A = P - f(θ)) of the arc section of the toric lens body of the present invention is optimized by a polynomial. Through various polynomials (such as the formula (II) or the formula (III)), various contact lens can be obtained. According to experimental data, the contact lens designed by a trigonometric polynomial (such as the formula (III)) can meet more practical requirements.

Moreover, the arc section defined by the toric lens body and the radius includes the optical regional section and the annular regional section. As such, in the process for manufacturing the contact lens of the present invention, the area of the optical regional section can be selectively designed, and then the area of the annular regional section can be calculated according to the formula (I). Alternatively, the area of the annular regional section can be selectively designed, and then the area of the optical regional section can be calculated according to the formula (I). In this way, different from the previous design in which only the positioning effect is taken into consideration, the contact lens of the present invention can have a good positioning effect and be worn with comfort.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its scope.

**Claims**

1. A contact lens, **characterized in** comprising:

a toric lens body (1), wherein the toric lens body (1) has radii extending outward from a center (O) along a radial direction, cross sections of the toric lens body (1) are defined by the radii and the toric lens body (1) in a thickness direction, and an area "A" of the cross section is presented by a formula (I):

$$A = P - f(\theta);$$

wherein, in formula (I), θ is an azimuth angle, $0° \leq \theta \leq 360°$, f(θ) is a polynomial, and $0.5 \leq P \leq 7$.

2.  The contact lens according to claim 1, wherein f($\theta$) is presented by: ($a\theta^4 + b\theta^3 + c\theta^2 + d\theta$); wherein $\theta$ is an azimuth angle, $0° \leq \theta \leq 360°$, $-10^{-8} \leq a \leq -10^{-10}$, $10^{-8} \leq b \leq 10^{-5}$, $-10^{-1} \leq c \leq -10^{-5}$, and $10^{-5} \leq d \leq 10^{-1}$.

3.  The contact lens according to claim 2, wherein $-10^{-8} \leq a \leq -10^{-9}$, $10^{-6} \leq b \leq 10^{-5}$, $-10^{-1} \leq c \leq -10^{-4}$, and $10^{-4} \leq d \leq 10^{-1}$.

4.  The contact lens according to claim 1, wherein f($\theta$) is a trigonometric polynomial and is presented by: [k1sin($\theta$/2) + k2cos$^2$($\theta$/2)]; wherein $\theta$ is an azimuth angle, $0° \leq \theta \leq 360°$, $-0.2 \leq k1 \leq 0.5$, $0 \leq k2 \leq 6$, and k2 < P.

5.  The contact lens according to claim 1, wherein a maximum thickness difference ratio of the toric lens body (1) in the radial direction is lower than 100%.

6.  The contact lens according to claim 5, wherein the maximum thickness difference ratio of the toric lens body (1) in the radial direction is lower than 55%.

7.  The contact lens according to claim 1, wherein an area ratio of the cross section of the toric lens body (1) at an azimuth angle of 180° to the cross section of the toric lens body (1) at an azimuth angle of 0° ranges from 1.0 to 7.5.

8.  The contact lens according to claim 1, wherein an area ratio of the cross section of the toric lens body (1) at an azimuth angle of 90° to the cross section of the toric lens body (1) at an azimuth angle of 0° ranges from 1.0 to 4.5.

9.  The contact lens according to claim 1, wherein an area ratio of the cross section of the toric lens body (1) at an azimuth angle of 180° to the cross section of the toric lens body (1) at an azimuth angle of 90° ranges from 1.0 to 1.8.

10. The contact lens according to claim 1, wherein the cross section of the toric lens body (1) includes an optical regional section (A1) and an annular regional section (A2).

FIG. 1

FIG. 2

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

**Application Number**

EP 24 16 8920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/334409 A1 (BAKARAJU RAVI CHANDRA [AU] ET AL) 20 October 2022 (2022-10-20) * paragraphs [0002], [0164] - [0170]; figures 14, 15 * | 1-10 | INV. G02C7/04 G02C7/02 |
| X | US 2007/146629 A1 (GREEN TIMOTHY [US]) 28 June 2007 (2007-06-28) | 1-4,10 | |
| A | * the whole document * | 5-9 | |
| X | US 2019/317337 A1 (SAWADA YOHEI [JP] ET AL) 17 October 2019 (2019-10-17) | 1-4,10 | |
| A | * the whole document * | 5-9 | |
| X | US 2019/384072 A1 (RICHARDSON GARY [US]) 19 December 2019 (2019-12-19) | 1-4,10 | |
| A | * the whole document * | 5-9 | |
| X | EP 2 176 702 B1 (ALCON INC [CH]) 8 July 2020 (2020-07-08) | 1-4,10 | |
| A | * the whole document * | 5-9 | TECHNICAL FIELDS SEARCHED (IPC) |
| | | | G02C |

The present search report has been drawn up for all claims

| Place of search | Date of completion of the search | Examiner |
|---|---|---|
| Munich | 4 October 2024 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8920

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | Publication date | Patent family member(s) | | Publication date |
|---|---|---|---|---|
| US 2022334409 A1 | 20-10-2022 | AU | 2020354783 A1 | 10-03-2022 |
| | | AU | 2022241546 A1 | 27-10-2022 |
| | | CN | 114667477 A | 24-06-2022 |
| | | EP | 4034938 A1 | 03-08-2022 |
| | | JP | 2022549903 A | 29-11-2022 |
| | | KR | 20220066329 A | 24-05-2022 |
| | | TW | 202131060 A | 16-08-2021 |
| | | US | 2022334409 A1 | 20-10-2022 |
| | | WO | 2021056057 A1 | 01-04-2021 |
| US 2007146629 A1 | 28-06-2007 | CN | 101341435 A | 07-01-2009 |
| | | EP | 1982228 A2 | 22-10-2008 |
| | | ES | 2396994 T3 | 01-03-2013 |
| | | JP | 5097122 B2 | 12-12-2012 |
| | | JP | 2009521726 A | 04-06-2009 |
| | | US | 2007146629 A1 | 28-06-2007 |
| | | WO | 2007075975 A2 | 05-07-2007 |
| US 2019317337 A1 | 17-10-2019 | CN | 109073914 A | 21-12-2018 |
| | | EP | 3474064 A1 | 24-04-2019 |
| | | JP | 6646531 B2 | 14-02-2020 |
| | | JP | 2017227663 A | 28-12-2017 |
| | | KR | 20190019048 A | 26-02-2019 |
| | | US | 2019317337 A1 | 17-10-2019 |
| | | WO | 2017221439 A1 | 28-12-2017 |
| US 2019384072 A1 | 19-12-2019 | AU | 2019203774 A1 | 16-01-2020 |
| | | BR | 102019012371 A2 | 07-01-2020 |
| | | CA | 3046465 A1 | 18-12-2019 |
| | | CN | 110618540 A | 27-12-2019 |
| | | EP | 3584628 A1 | 25-12-2019 |
| | | JP | 7508203 B2 | 01-07-2024 |
| | | JP | 2019219660 A | 26-12-2019 |
| | | KR | 20190142729 A | 27-12-2019 |
| | | RU | 2019118640 A | 17-12-2020 |
| | | SG | 10201904953T A | 30-01-2020 |
| | | TW | 202013018 A | 01-04-2020 |
| | | US | 2019384072 A1 | 19-12-2019 |
| EP 2176702 B1 | 08-07-2020 | CA | 2695516 A1 | 12-02-2009 |
| | | EP | 2176702 A1 | 21-04-2010 |
| | | JP | 5831865 B2 | 09-12-2015 |
| | | JP | 2010536070 A | 25-11-2010 |
| | | KR | 20100040958 A | 21-04-2010 |
| | | US | 2009040458 A1 | 12-02-2009 |
| | | WO | 2009020963 A1 | 12-02-2009 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 24 16 8920

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | Publication date | Patent family member(s) | Publication date |
|---|---|---|---|

EPO FORM P0459

For more details about this annex : see Official Journal of the European Patent Office, No. 12/82